# FASCICULE DE BREVET EUROPEEN

(11) **EP 3 660 276 B1**
(45) Date de publication et mention de la délivrance du brevet: **24.02.2021**
(21) Numéro de dépôt: 19209723.6
(22) Date de dépôt: 18.11.2019
(51) Int. Cl.: F01D 15/10, F01D 21/00, F02C 9/26

(54) **PROCÉDÉ ET SYSTÈME POUR ARRÊTER UNE TURBINE À GAZ ET VÉHICULE**
VERFAHREN UND SYSTEM ZUM ABSCHALTEN EINER GASTURBINE UND FAHRZEUG
A METHOD AND A SYSTEM FOR STOPPING A GAS TURBINE, AND A VEHICLE

(30) Priorité: 30.11.2018 FR 1872143
(43) Date de publication de la demande: 03.06.2020
(73) Titulaire: Airbus Helicopters, 13725 Marignane Cedex (FR)
(72) Inventeur: MARIOTTO, Damien, 13100 AIX EN PROVENCE (FR); CERQUEIRA, Stéphane, 13090 AIX EN PROVENCE (FR)
(74) Mandataire: GPI & Associés

(56) Documents cités:
- EP-A1- 2 644 841
- EP-A1- 3 075 662
- WO-A1-2009/118298
- WO-A1-2016/055738
- US-A1- 2010 275 608

## Description

La présente invention concerne un procédé et un système pour arrêter une turbine à gaz, notamment une turbine à gaz d'un véhicule et en particulier d'un aéronef voire par exemple d'un aéronef à voilure tournante, et le cas échéant au moins un système rotatif entrainé par cette turbine à gaz.

Un véhicule et en particulier un aéronef peut être muni d'une pluralité de turbines à gaz. Certains giravions sont ainsi munis d'une ou plusieurs turbines à gaz pour entraîner au moins un système rotatif et notamment un rotor de sustentation voire de propulsion selon diverses directions.

Classiquement, une turbine à gaz comprend un générateur de gaz muni d'au moins un compresseur, d'une chambre de combustion et d'un ensemble de détente haute pression relié au compresseur. Le compresseur peut être muni d'une pluralité d'étages de compression, axiaux et/ou centrifuges. De même, l'ensemble de détente peut comprendre une pluralité de turbines de détente. En outre, la turbine à gaz comporte au moins une turbine de travail basse pression libre ou liée au générateur de gaz éventuellement avec une roue libre. Sur un aéronef, la turbine de travail peut entrainer au moins un rotor de sustentation voire de propulsion selon diverses directions. La puissance créée par le générateur de gaz est transmise à au moins une turbine de travail qui elle-même la transmet au rotor de sustentation ou de propulsion.

Le fonctionnement de la turbine à gaz est contrôlé par un système de gestion. Par exemple, un système de gestion est connu sous l'acronyme FADEC associé à l'expression anglaise « Full Authority Digital Engine Control ». Un système de gestion comprend usuellement un calculateur. Un tel calculateur peut être connu sous l'acronyme « EECU » correspondant à l'expression anglaise « Engine Electronic Control Unit », ou plus simplement sous l'acronyme « ECU » correspondant à l'expression anglaise « Engine Control Unit ». De plus, le calculateur est relié à divers capteurs et à un doseur de carburant de la turbine à gaz. Le calculateur pilote alors le doseur de carburant pour contrôler le débit de carburant transmis à la turbine à gaz.

Le système de gestion est classiquement relié à un sélecteur, dit « sélecteur de commande » par commodité. Par exemple, le sélecteur de commande comporte trois positions.

Lorsque le sélecteur de commande se trouve dans une première position dite par exemple « position STOP », le calculateur ferme le doseur de carburant. Le générateur de gaz est alors arrêté ce qui entraine l'arrêt de la turbine de travail et ainsi du ou des rotors associés.

Lorsque le sélecteur de commande se trouve dans une deuxième position dénommée par exemple « position FLIGHT », la turbine à gaz est en fonctionnement. L'expression « fonctionnement nominal » utilisée par la suite est relative au fonctionnement de la turbine à gaz lorsque le sélecteur de commande est dans la position FLIGHT. La turbine à gaz, ainsi que le(s) rotor(s), peut alors fonctionner en mettant en œuvre une pluralité de régimes de fonctionnement distincts.

Enfin, le sélecteur de commande comprend une troisième position dénommée par exemple « position IDLE ». Lorsque le sélecteur de commande est positionné dans cette position IDLE, la turbine à gaz, ainsi que le(s) rotor(s), fonctionnent au ralenti, le doseur de carburant continuant à distribuer du carburant à la turbine à gaz mais selon un débit réduit.

Pour arrêter une turbine à gaz en fonctionnement nominal, un individu peut selon une première procédure basculer l'interrupteur de commande de la position « FLIGHT » à la position « STOP ».

Lorsque l'interrupteur de commande est basculé sur la position STOP, le système de gestion ferme le doseur de carburant pour couper l'alimentation en carburant de la turbine à gaz. Le générateur de gaz est alors arrêté rapidement, laissant la turbine de travail, ainsi que le(s) rotor(s), décélérer également. En présence d'une turbine de travail libre ou liée avec roue-libre, cette décélération se fera plus rapidement dû aux puissances résistives liées aux pertes principalement mécaniques et aérodynamiques de l'ensemble mécanique lié à la turbine de travail.

Un arrêt direct de la turbine à gaz requis en basculant le sélecteur de commande de la position FLIGHT à la position STOP peut à termes entraîner un phénomène de cokéfaction du carburant et/ou de l'huile de lubrification. Par exemple, de l'huile est utilisée pour lubrifier des paliers se trouvant dans des zones du générateur de gaz qui sont très chaudes lorsque le moteur est dans un mode de fonctionnement nominal. Le phénomène de cokéfaction peut tendre à solidifier une partie de cette huile lorsque la turbine à gaz est arrêtée brusquement et lorsque le moteur est donc encore chaud. Une telle huile solidifiée est susceptible d'obturer des gicleurs de lubrification. De plus, lorsque la turbine à gaz est encore chaude, la turbine à gaz peut subir un endommagement si un redémarrage n'est pas effectué dans des conditions particulières.

Pour éviter ce phénomène de cokéfaction et/ou pour éviter un endommagement en cas de redémarrage, un motoriste peut requérir de suivre un mode opératoire particulier afin de stabiliser thermiquement la turbine à gaz avant de l'arrêter totalement. Selon une seconde procédure, ce mode opératoire requiert de basculer en premier lieu le sélecteur de commande sur la position IDLE pour maintenir la turbine à gaz au ralenti en l'alimentant en carburant à un débit réduit pendant une certaine durée, éventuellement indiquée dans le manuel de vol, avant de positionner l'interrupteur de commande sur la position STOP. Le passage au ralenti vise à obtenir une stabilisation thermique à basse température de la turbine à gaz avant l'extinction complète de la turbine à gaz pour au moins limiter les risques de cokéfaction voire pour éviter des difficultés au redémarrage. La phase de ralenti permet de continuer à mettre en mouvement les organes tournants de la turbine à gaz en injectant une quantité minimale de carburant dans le générateur de gaz. Le passage au ralenti permet notamment d'évacuer les gaz chauds présents dans la turbine à gaz et de refroidir cette turbine à gaz.

Ce mode opératoire est efficace mais augmente la charge de travail d'un pilote et/ou nécessite un temps d'attente dans la position IDLE de l'ordre d'une à plusieurs minutes, le ou les rotors entraînées par la turbine de travail étant de plus maintenus en rotation. Sur un aéronef multimoteur, ce mode opératoire est de plus à appliquer pour chaque turbine à gaz. Dans certains cas d'urgence, un pilote peut alors choisir de ne pas appliquer cette procédure en acceptant de fait une certaine dégradation de la turbine à gaz au bénéfice d'un gain de temps pour arrêter la turbine à gaz voire le ou lesdits rotors.

Le document EP 3204618 décrit une étape de stabilisation thermique durant laquelle une turbine à gaz fonctionne au ralenti avant son arrêt complet, la durée de l'étape de stabilisation thermique étant adaptée à partir d'un modèle de comportement thermique.

Le document FR 3017413 n'appartient pas au domaine de l'invention, ayant pour objet un dispositif de lubrification. De même, les documents relatifs à des turbocompresseurs d'automobile n'appartiennent de fait pas au domaine de l'invention.

Le document EP 3075662 décrit un calculateur en communication avec un sélecteur configuré pour générer un ordre d'arrêt d'une turbine à gaz et un ordre de fonctionnement de cette turbine à gaz.

La présente invention a alors pour objet de proposer un procédé automatique innovant pour arrêter une turbine à gaz, et éventuellement un ou des rotors entraînés par la turbine à gaz, en limitant les risques de cokéfaction d'huile.

L'invention vise donc un procédé pour arrêter au moins une turbine à gaz, ladite au moins turbine à gaz comportant un générateur de gaz muni d'organes tournants et d'une chambre de combustion, ladite au moins une turbine à gaz comprenant au moins une turbine de travail, ladite au moins une turbine à gaz comprenant un circuit de carburant piloté par un calculateur, ledit calculateur étant en communication avec un sélecteur.

Le sélecteur peut être sollicité par un pilote pour générer un ordre d'arrêt de la turbine à gaz. De plus, le sélecteur peut être sollicité par un pilote pour générer au moins un ordre de fonctionnement de la turbine à gaz, et par exemple un ordre de fonctionnement nominal de la turbine à gaz et un ordre de fonctionnement au ralenti de la turbine à gaz. Le sélecteur peut prendre diverses formes et par exemple la forme d'un organe déplaçable entre diverses positions, de plusieurs organes manoeuvrables par un pilote, d'un organe tactile, d'un organe commandé oralement ou visuellement...

Ce procédé comporte les étapes suivantes pour arrêter ladite au moins turbine à gaz lorsqu'elle est en fonctionnement et alimentée en carburant par le circuit de carburant :
- génération d'un ordre d'arrêt de la au moins une turbine à gaz avec le sélecteur,
- suite à ladite génération de l'ordre d'arrêt, fermeture du circuit de carburant sur ordre du calculateur,
- suite à ladite génération de l'ordre d'arrêt et lorsque ladite au moins une turbine à gaz n'est pas au ralenti préalablement à ladite fermeture ou lorsque ladite au moins une turbine à gaz est au ralenti au moment de ladite génération de l'ordre d'arrêt pendant un temps de fonctionnement inférieur à un seuil mémorisé, mise en rotation automatique desdits organes tournants du générateur de gaz avec une machine électrique pendant une durée limitée.

Par exemple, le seuil peut être mémorisé dans le calculateur de la au moins une turbine à gaz ou dans la machine électrique voire dans un contrôleur externe.

L'expression « fermeture du circuit de carburant » signifie par exemple que le calculateur coupe l'alimentation en carburant de la chambre de combustion du moteur en transmettant un signal d'arrêt à un organe de ce circuit de carburant. Ainsi, le calculateur peut transmettre un signal d'arrêt pour par exemple fermer un doseur de carburant, pour couper une pompe, et/ou pour fermer une valve ou une vanne du circuit de carburant...

Le terme « automatique » signifie que la machine électrique est en outre activée pour entraîner les organes tournants en rotation sans sollicitation humaine lorsque les conditions prévues sont remplies.

Dès lors, lorsque la turbine à gaz est alimentée en carburant le sélecteur est sollicité par un opérateur pour générer l'ordre d'arrêt afin d'éteindre cette turbine à gaz. Le calculateur reçoit l'ordre d'arrêt et commande le circuit de carburant pour couper l'alimentation en carburant de la chambre de combustion.

Si l'arrêt a été commandé sans passer par une phase de ralenti ou en passant par une phase de ralenti pendant un temps inférieur à un seuil, la machine électrique met en mouvement les organes tournants du générateur de gaz pendant une durée dénommée « durée limitée » par commodité dans la mesure où cette durée a une valeur éventuellement variable mais finie. La machine électrique entraîne en rotation les organes tournants du générateur de gaz à une vitesse de ventilation. Cette vitesse de ventilation peut être faible mais permet de faire circuler les gaz au sein de la turbine à gaz et notamment d'évacuer les gaz chauds présents dans la turbine à gaz au moment de la coupure de l'alimentation en carburant. Lors de cette ventilation et en l'absence de carburant injecté dans la chambre de combustion, la vitesse de rotation de la turbine de travail décroit. En particulier, en présence d'une turbine de travail libre ou liée avec roue-libre la vitesse de rotation de la turbine de travail devient rapidement nulle, à savoir selon un gradient de vitesse dépendant au moins des puissances résistives liées aux pertes principalement mécaniques et aérodynamiques de l'ensemble mécanique lié à cette turbine de travail incluant le(s) rotor(s).

Sur un aéronef muni d'au moins un rotor entraîné par la turbine de travail, la turbine à gaz peut être ventilée avec le rotor à l'arrêt.

En outre, la rapidité de l'arrêt de la turbine de travail et du rotor peut de plus permettre d'améliorer le confort acoustique de passagers et de diminuer les risques d'accident par contact entre un individu et un rotor tournant.

Ce procédé propose ainsi une méthode de ventilation automatique d'une turbine à gaz. Cette méthode peut permettre de rester conforme aux exigences du manuel de vol sur un aéronef en ventilant la turbine à gaz afin de garantir l'intégrité de cette turbine à gaz en limitant les risques de cokéfaction d'huile et potentiellement un endommagement ou une difficulté au redémarrage.

De plus, l'automatisation du procédé peur permettre d'obtenir un gain de temps significatif lors de la réalisation de missions et/ou un allégement de la charge de travail d'un pilote sur un aéronef lors de l'arrêt de la turbine à gaz.

Lors de la génération directe de l'ordre d'arrêt à savoir sans passer par une phase de ralenti, la ventilation nécessaire pour refroidir la turbine à gaz afin de limiter les risques de cokéfaction n'est pas assurée par une phase de fonctionnement au ralenti en injectant un minimum de carburant dans la chambre de combustion, mais par l'entrainement des organes tournants du générateur de gaz par une machine électrique.

Lors de la génération indirecte de l'ordre d'arrêt à savoir en passant par une phase de ralenti, la ventilation nécessaire pour refroidir la turbine à gaz afin de limiter les risques de cokéfaction est assurée par la phase de fonctionnement au ralenti et dans certaines conditions par la suite par l'entrainement des organes tournants du générateur de gaz par une machine électrique.

Un tel procédé peut tendre à optimiser de fait la consommation de carburant en n'imposant pas une phase de ralenti longue consommatrice de carburant et en utilisant une machine électrique qui consomme une énergie uniquement électrique stockée par avance dans des systèmes de stockage d'énergie pour mettre en rotation les organes tournants.

Ce procédé peut de plus comporter une ou plusieurs des caractéristiques qui suivent.

Selon un aspect, le procédé peut comporter une étape de freinage avec un frein de ladite au moins une turbine de travail.

Eventuellement, un frein peut être agencé pour freiner directement ou indirectement au moins une turbine de travail encore plus rapidement, notamment dans le cadre d'une turbine libre ou liée avec roue-libre. Cette étape de freinage de la turbine de travail avec un frein peut se faire de façon automatique à partir du moment ou le sélecteur génère l'ordre d'arrêt de la turbine à gaz ou suite à la fermeture du circuit de carburant par exemple.

Selon un aspect, ledit procédé peut comporter les étapes suivantes préalablement à ladite fermeture :
- sollicitation par un pilote du sélecteur pour générer ledit ordre d'arrêt, ledit sélecteur transmettant un signal de sélection au calculateur indiquant ledit ordre d'arrêt,
- transmission d'un ordre de coupure par le calculateur au circuit de carburant suite à une réception dudit signal de sélection, ledit circuit de carburant se fermant à réception dudit ordre de coupure.

Selon un aspect, ladite fermeture du circuit de carburant peut être réalisée en sollicitant le sélecteur pour passer directement de la génération d'un ordre de fonctionnement nominal à la génération d'un ordre d'arrêt sans passer par la génération d'un ordre de fonctionnement au ralenti.

En effet, la machine électrique est alors employée pour limiter les risques de cokéfaction. Cette procédure peut permettre d'obtenir un gain de temps significatif lors de la réalisation des missions et/ou un allégement de la charge de travail d'un pilote sur un aéronef.

Selon un aspect, la durée limitée peut être égale à une durée maximale mémorisée dans le système, et par exemple dans le calculateur ou dans la machine électrique. A titre d'exemple, la durée maximale peut être égale à une minute mais peut atteindre d'autres valeurs en fonction du modèle thermique et aérodynamique de la turbine à gaz par exemple. Cette durée d'une minute peut être augmentée par exemple à deux minutes afin d'être sûr que toutes les contraintes thermiques (gaz chauds, huiles chaudes, parois chaudes de la turbine à gaz) soient bien évacuées.

Selon un autre exemple, la durée limitée peut être variable et paramétrable automatiquement en utilisation par exemple en fonction d'au moins un paramètre. Selon diverses variantes, la durée limitée peut être établie en utilisation en mettant en œuvre un modèle de fonctionnement de la turbine à gaz et/ou de paramètres mesurés en temps réel. A titre illustratif, une relation mathématique mémorisée peut fournir la durée limitée à appliquer en fonction d'une température de la turbine à gaz et/ou d'une température extérieure et/ou le cas échéant d'un temps de fonctionnement au ralenti de la turbine à gaz.

Selon un aspect, le sélecteur pouvant être configuré pour pouvoir générer un ordre de fonctionnement au ralenti de la au moins une turbine à gaz, un pilote peut requérir avec le sélecteur un fonctionnement au ralenti avant de requérir l'arrêt de la turbine à gaz. Le procédé peut alors comporter les étapes suivantes :
- détection que ladite au moins une turbine à gaz est au ralenti au moment de ladite génération de l'ordre d'arrêt,
- lorsque ladite au moins une turbine à gaz est au ralenti au moment de ladite génération de l'ordre d'arrêt détermination par exemple par le calculateur d'un temps de fonctionnement au ralenti de la turbine à gaz avant ladite génération de l'ordre d'arrêt,
- comparaison éventuelle dudit temps au seuil mémorisé,
- lorsque ledit temps est inférieur au seuil, mise en rotation automatique desdits organes tournants du générateur de gaz avec la machine électrique pendant ladite durée limitée.

Ce procédé peut aussi s'appliquer en présence d'un arrêt direct de la turbine à gaz en considérant alors que ledit temps de fonctionnement comparé au seuil est nul.

Dès lors, suite à la fermeture du circuit de carburant, la machine électrique est mise en route automatiquement pour entraîner les organes tournants du générateur de gaz soit si la turbine à gaz n'est pas au ralenti au moment de la fermeture soit si la turbine à gaz a été au ralenti pendant un temps inférieur à un seuil au moment de la fermeture. Ainsi, ce procédé permet de garantir une ventilation complète de la turbine à gaz.

En présence d'une phase de ralenti, la durée limitée peut varier notamment en fonction du temps de fonctionnement au ralenti de la turbine à gaz avant la génération de l'ordre d'arrêt.

Par exemple, la durée limitée peut être égale à une différence entre le seuil mémorisé et ledit temps. Ce seuil mémorisé peut à l'instar de la durée maximale précitée être fixe ou paramétrable en utilisation.

A titre illustratif, le seuil mémorisé peut être égal à une minute. Si la turbine à gaz est au ralenti depuis vingt secondes lorsque le sélecteur est sollicité pour générer l'ordre d'arrêt, alors la machine électrique met en mouvement le générateur de gaz pendant une durée limitée égale à une minute moins vingt secondes soit quarante secondes.

Selon un aspect, la vitesse de ventilation peut être comprise entre 8% et 15% d'une vitesse nominale mémorisée pour le générateur de à gaz.

Eventuellement, la vitesse de ventilation est paramétrable automatiquement en utilisation, par exemple en fonction des conditions environnementales. Selon un exemple, la vitesse de ventilation peut être égale à 8% de la vitesse nominale mémorisée pour une température extérieure supérieure à 15°C et égale à 15% de la vitesse nominale mémorisée pour une température extérieure inférieure ou égale à 15°C.

Eventuellement, la vitesse de ventilation est soit constante soit dégressive soit constante puis dégressive

Cette vitesse de ventilation peut-être constante ou suivre un profil adapté pour optimiser la durée de vie de la turbine à gaz, pour diminuer le temps de ventilation et/ou pour optimiser la consommation de carburant. Les profils précédents sont donnés à titre illustratif.

Par exemple, la vitesse de ventilation peut être égale à une première valeur pendant une première durée puis décroit lentement jusqu'à une vitesse minimale avant un arrêt complet.

Selon un aspect, la mise en rotation automatique desdits organes tournants du générateur de gaz avec la machine électrique pendant une durée limitée est soit commandée par un signal transmis par ledit sélecteur à la machine électrique soit commandée par un signal transmis par ledit calculateur à la machine électrique soit commandée par un signal transmis par un contrôleur externe qui est en communication avec au moins ledit sélecteur ou le calculateur.

Selon une variante, une machine électrique peut être commandée par sa propre électronique de commande pour appliquer le procédé en fonction d'au moins un loi mémorisée dans cette électronique de commande et de signaux provenant du sélecteur et/ou du calculateur et/ou d'un contrôleur externe.

Selon un aspect, la mise en rotation automatique desdits organes tournants du générateur de gaz avec la machine électrique pendant une durée limitée comporte un asservissement en vitesse de ladite machine électrique en fonction d'une vitesse estimée avec au moins un capteur de la machine électrique ou de la au moins une turbine à gaz. Un tel capteur peut être par exemple un capteur de vitesse ou un capteur de position.

Selon un aspect, la mise en rotation automatique desdits organes tournants du générateur de gaz avec la machine électrique pendant une durée limitée comporte un asservissement en couple de ladite machine électrique en fonction d'un couple estimé avec une mesure du courant électrique consommé par la machine électrique. Le courant électrique consommé peut être mesuré avec un capteur de courant électrique usuel.

Selon un aspect, ladite au moins une turbine à gaz pouvant comprendre plusieurs turbines à gaz reliées chacune à une machine électrique, le procédé comporte l'étape suivante : contrôle de chaque machine électrique en mode moteur avec un contrôleur commun, ledit contrôleur activant les machines électriques l'une après l'autre lors d'un arrêt des turbines à gaz, aucune machine électrique ne pouvant fonctionner dans un mode générateur d'électricité lors dudit arrêt.

Outre un procédé, l'invention vise un système appliquant ce procédé. Un tel système est muni d'une au moins turbine à gaz, ladite turbine à gaz comportant un générateur de gaz muni d'organes tournants et d'une chambre de combustion, ladite turbine à gaz comprenant au moins une turbine de travail, ladite turbine à gaz comprenant un circuit de carburant piloté par un calculateur, ledit calculateur étant en communication avec un sélecteur, ledit sélecteur étant configuré pour générer un ordre d'arrêt de la au moins turbine à gaz et au moins un ordre de fonctionnement de la au moins une turbine à gaz.

De plus, le système comporte une machine électrique par turbine à gaz, ladite machine électrique étant reliée au générateur de gaz de la turbine à gaz correspondante et étant configurée pour appliquer le procédé de l'invention.

Selon un aspect, le système peut comporter au moins un frein pour freiner ladite turbine de travail.

L'invention vise de plus un véhicule muni d'un tel système.

Ce véhicule peut comporter au moins un rotor mis en rotation par ladite turbine de travail

L'invention et ses avantages apparaîtront avec plus de détails dans le cadre de la description qui suit avec des exemples donnés à titre illustratif en référence aux figures annexées qui représentent :
[Fig 1] la figure 1, une vue d'un véhicule selon l'invention,
[Fig 2] la figure 2, une vue schématique d'une turbine à gaz,
[Fig 3] la figure 3, un logigramme illustrant le procédé selon l'invention,
[Fig 4] la figure 4, un diagramme illustrant un procédé de l'art antérieur,
[Fig 5] la figure 5 un diagramme illustrant le procédé de l'invention, et
[Fig 6] la figure 6 un diagramme illustrant le procédé de l'invention.

Les éléments présents dans plusieurs figures distinctes sont affectés d'une seule et même référence.

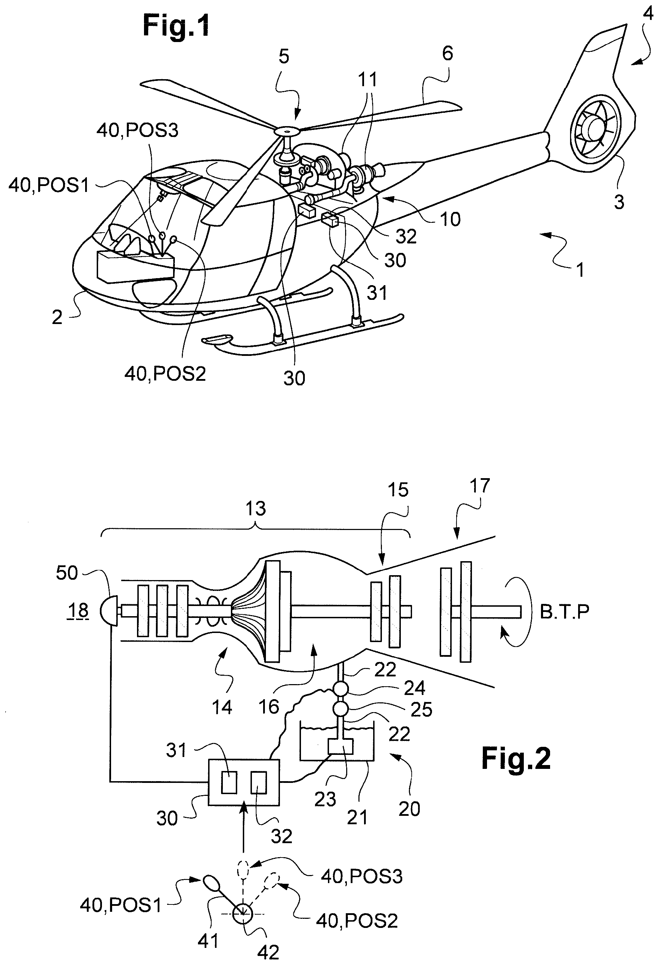

La figure 1 présente une turbine à gaz 11 et un système permettant d'arrêter la turbine à gaz en suivant le procédé de l'invention. La turbine à gaz est agencée sur un véhicule. L'invention est applicable à tout type de véhicule. De plus, le procédé est aussi applicable pour arrêter des turbines à gaz qui ne seraient pas localisées sur un véhicule.

Pour illustrer cette invention, la figure 1 présente un exemple relatif à un véhicule 1 de type aéronef comprenant au moins une turbine à gaz.

Cet aéronef comporte une structure s'étendant longitudinalement d'une extrémité avant 2 vers une extrémité arrière 3. Cet aéronef est de plus un giravion muni d'un rotor principal 5 pourvu de pales 6 pour assurer au moins partiellement la sustentation voire la propulsion de l'aéronef. L'aéronef 1 comporte en outre un rotor de contrôle du mouvement en lacet 4 pour contrôler le mouvement en lacet de l'aéronef.

Selon l'exemple de la figure 1 pour mettre en mouvement les différents rotors, l'aéronef comprend une installation motrice 10. L'installation motrice 10 est munie d'une pluralité de turbines à gaz 11. Chaque turbine à gaz met par exemple en mouvement le rotor principal 5 au travers d'une boîte de transmission de puissance principale dite BTP.

Chaque turbine à gaz est pilotée par un calculateur 30. Le terme calculateur désigne un unique calculateur ou un ensemble de calculateurs. En outre, un calculateur peut comprendre par exemple au moins un processeur 31 et au moins une mémoire 32, au moins un circuit intégré, au moins un système programmable, au moins un circuit logique, ces exemples ne limitant pas la portée donnée à l'expression « calculateur ». Un calculateur peut être un ECU.

Par exemple, chaque turbine à gaz est pilotée par son propre calculateur 30.

En référence à la figure 2 et indépendamment de son implantation au sein d'un véhicule ou non, une turbine à gaz comporte usuellement une entrée d'air 18 pour alimenter en air un générateur de gaz 13. Ce générateur de gaz 13 inclut un compresseur 14 pourvu d'une ou plusieurs turbines de compression pour comprimer l'air provenant de l'entrée d'air 18.

L'air comprimé est ensuite acheminé vers une chambre de combustion 14 du générateur de gaz 13. Cette chambre de combustion est alimentée en carburant par un circuit de carburant 20. Par exemple, le circuit de carburant comporte au moins un réservoir de carburant 21, et/ou au moins une tuyauterie 22, et/ou au moins une pompe de gavage 23 et/ou d'aspiration, et/ou un doseur de carburant 24, et/ou un robinet coupe-feu 25... De plus, le calculateur 30 peut fermer le circuit de carburant, à savoir peut couper l'alimentation en carburant de la chambre de combustion en envoyant un signal d'arrêt à cet effet à ladite au moins une pompe et/ou au doseur de carburant et/ ou au robinet coupe feu et/ou à tout organe du circuit de carburant apte à isoler hydrauliquement la chambre de combustion 16 du réservoir de carburant 21. Un tel signal d'arrêt peut prendre la forme d'un signal électrique, analogique, numérique...

Les gaz chauds sortant de la chambre de combustion 16 se détendent et mettent en rotation un ensemble de détente 15 muni d'au moins une turbine haute pression. Chaque turbine haute pression est solidaire en rotation du compresseur 14.

Dès lors, le compresseur 14 et l'ensemble de détente 15 forment des organes tournants du générateur de gaz 13. Le compresseur 14 et l'ensemble de détente 15 sont mis en rotation à une vitesse de rotation Ng.

Par ailleurs, la turbine à gaz 11 comporte au moins une turbine de travail 17 en aval du générateur de gaz, et deux turbines de travail selon l'exemple illustré. La turbine de travail permet alors de mettre en mouvement un arbre de sortie de la turbine à gaz 11. Par exemple, un tel arbre de sortie peut mettre en mouvement une boîte de transmission de puissance BTP. La turbine de travail peut être une turbine liée par une roue libre au générateur de gaz ou une turbine libre.

En outre, l'installation comporte une machine motrice reliée mécaniquement aux organes tournants du générateur de gaz 13. Par exemple, la machine motrice est reliée à un arbre solidaire physiquement en rotation de chaque turbine du générateur de gaz. Eventuellement, la machine motrice est une machine électrique 50 et par exemple une machine électrique usuelle connue parfois sous l'expression « starter-générateur » apte à fonctionner alternativement selon un mode moteur et un mode générateur d'énergie électrique. La machine électrique peut aussi comprendre un simple moteur électrique avec son électronique de contrôle associée. Cette machine électrique 50 peut être reliée par des connexions filaires ou non filaires à au moins un calculateur 30 afin de pouvoir recevoir des signaux de commande émis par le calculateur 30.

En présence de plusieurs turbines à gaz, une machine électrique peut éventuellement être reliée à chaque turbine à gaz.

En présence de plusieurs turbines à gaz, le système peut comporter une machine électrique par turbine à gaz, les machines électriques pouvant néanmoins avoir des organes communs. Par exemple chaque machine électrique peut comporter une électronique de puissance et de contrôle du mode moteur et une électronique de puissance et de contrôle du mode générateur d'énergie électrique dans la même unité.

En présence de plusieurs machines électriques, un unique contrôleur commun peut former une électronique de puissance et de contrôle du mode moteur de chaque machine électrique.

En effet, le démarrage des turbines à gaz se faisant l'un après l'autre, les électroniques de puissance et de contrôle du mode moteur des machines électriques peuvent être communalisés au sein d'un contrôleur commun afin de réduire la masse totale du système complet. Eventuellement lors d'une phase d'arrêt des turbines à gaz dans le cadre de cette invention, les machines électriques sont commandées automatiquement par le contrôleur commun pour être actives l'une après l'autre. Chaque machine électrique est éventuellement commandée selon une loi de contrôle en créneau en prenant en compte l'éventuelle décélération lente de la machine électrique précédemment activée. Eventuellement, lors d'une phase d'arrêt des turbines à gaz les machines électriques sont empêchées de fonctionner en mode générateur d'énergie électrique.

Selon un autre aspect, le calculateur 30 peut être relié à un ensemble de système de mesure par des connexions filaires ou non filaires. Cet ensemble de mesure peut inclure divers capteurs, le terme « capteur » étant à entendre au sens large en faisant référence soit à un capteur en tant que tel, soit à un système permettant de déterminer la valeur d'un paramètre. L'ensemble de mesure 50 peut inclure des capteurs déterminant la valeur d'au moins un paramètre moteur d'une turbine à gaz tel que par exemple une température de la turbine à gaz telle qu'une température en aval du générateur de gaz, un couple développé par la turbine à gaz, la vitesse de rotation du générateur de gaz de la turbine à gaz, la vitesse de rotation de la turbine de travail.

Selon un aspect, l'installation peut comprendre un sélecteur 40 manœuvrable pour requérir le fonctionnement ou l'arrêt d'au moins une turbine à gaz. Par exemple, l'installation comporte un sélecteur 40 par turbine à gaz. Chaque calculateur 30 peut être relié à un ou plusieurs sélecteurs 40 par des connexions filaires ou non filaires. Cette machine électrique 50 peut être reliée par des connexions filaires ou non filaires à un sélecteur 40.

Un tel sélecteur 40 peut comprendre un organe 41 pouvant atteindre diverses positions POS1, POS2, POS3 pour générer divers ordres ORD1, ORD2, ORD3 et un capteur 42. Le capteur 42 transmet au calculateur 30 un signal dit « signal de sélection » par commodité qui varie en fonction de la position atteinte. Le sélecteur peut notamment être positionné au moins dans un première position POS1 illustrée en trait plein pour transmettre un signal de sélection indiquant au calculateur que la turbine à gaz doit être totalement éteinte. Le sélecteur peut être positionné dans d'autres positions et par exemple dans une deuxième position POS2 illustrée par des pointillés pour transmettre un signal de sélection indiquant au calculateur que la turbine à gaz doit fonctionner normalement. Le sélecteur peut être positionné dans une troisième position intermédiaire pour transmettre un signal de sélection indiquant au calculateur que la turbine à gaz doit fonctionner au ralenti.

Le sélecteur peut prendre d'autres formes pour requérir les trois modes de fonctionnement précités. Par exemple, le sélecteur peut comprendre un système de sélection de commande tactile, vocale ou visuelle.

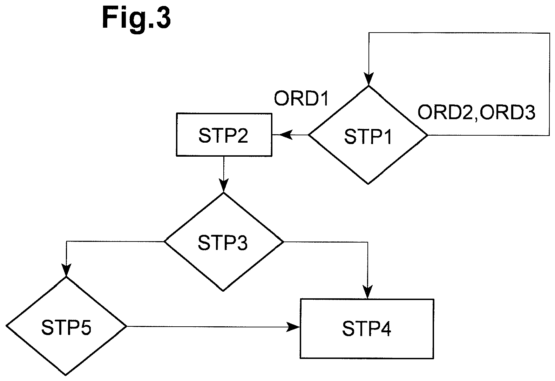

Cette installation peut appliquer le procédé de l'invention illustré sur la figure 3.

Selon ce procédé, durant une étape de surveillance STP1, le calculateur 30 peut déterminer l'ordre donné par le sélecteur 40. Par exemple, le calculateur 30 analyse le signal de sélection provenant du sélecteur 40 pour déterminer si ce signal de sélection est porteur d'un ordre d'arrêt ORD1 de la turbine à gaz ou d'un ordre de fonctionnement de la turbine à gaz, et plus précisément un ordre de fonctionnement nominal ORD2 ou au ralenti ORD3 de la turbine à gaz.

Lorsque le sélecteur 40 génère un ordre d'arrêt ORD1, le calculateur 30 contrôle au moins un élément du circuit de carburant 20 pour fermer ce circuit de carburant durant une étape de fermeture STP2.

En parallèle, avant la fermeture du circuit de carburant ou à la suite de l'étape de fermeture du circuit de carburant, durant une étape d'évaluation STP3 le système détermine si la machine électrique doit être utilisée pour ventiler la turbine à gaz.

En particulier, le système peut déterminer si la turbine à gaz était au ralenti avant que l'ordre de fermeture soit donné. Par exemple, le calculateur 30 ou une électronique de puissance et de contrôle du mode moteur de la machine électrique voire un contrôleur externe détermine si le sélecteur 40 générait un ordre de fonctionnement nominal ORD2 ou de fonctionnement au ralenti ORD3 avant de générer l'ordre d'arrêt ORD1 en analysant le signal émis par le sélecteur 40.

Si la turbine à gaz 11 n'était pas au ralenti préalablement à la fermeture du circuit de carburant alors une étape de ventilation forcée STP4 est initiée. Le calculateur 30 ou une électronique de puissance et contrôle du mode moteur de la machine électrique voire un contrôleur externe commande la machine électrique 50 pour requérir son fonctionnement en mode moteur. La machine électrique 50 est mise en mouvement automatiquement pour mettre en rotation les organes tournants 14, 15 du générateur de gaz à une vitesse de ventilation pendant une durée limitée Tvent. Cette durée limitée Tvent peut être dans ce cas égale à une durée maximale Tmax mémorisée, la durée maximale Tmax pouvant être fixe et par exemple de l'ordre d'une minute ou paramétrable en utilisation en fonction d'un ou plusieurs paramètres.

Durant l'étape de ventilation forcée STP4, le mouvement rotatif des organes tournants 14, 15 permet de ventiler la turbine à gaz malgré la coupure de carburant.

En outre, la vitesse de ventilation peut être optimisée contrôlable et paramétrable en fonction du modèle thermique et aérodynamique de la turbine à gaz et/ou de paramètres mesurés en temps réel.

Selon une possibilité, la vitesse de ventilation peut être au maximum comprise entre 8% et 15% d'une vitesse nominale définie pour le générateur de gaz.

En outre, la turbine de travail est éventuellement freinée par un frein.

A l'issue de la durée limitée Tvent, la machine électrique est arrêtée.

Si la turbine à gaz 11 était au ralenti préalablement à la fermeture du circuit de carburant, le procédé comporte une étape d'appréciation STP5 durant laquelle le système et par exemple le calculateur 30 détermine un temps Tfct de fonctionnement au ralenti de la turbine à gaz 11 avant la génération de l'ordre d'arrêt par des méthodes usuelles. Le calculateur compare ce temps Tfct à un seuil Ts. Par exemple, le seuil Ts est égal à la durée maximale Tmax précitée.

Si le calculateur détecte que ce temps Tfct est supérieur ou égal au seuil Ts, la mise en rotation automatique des organes tournants 14, 15 est inhibée. Le générateur de gaz voire la turbine de travail s'arrêtent progressivement en étant par exemple freinés par un frein.

Par contre, si le temps Tfct est inférieur au seuil Ts, l'étape de ventilation forcée STP4 est mise en œuvre.

Cependant, la durée limitée pendant laquelle la machine électrique est utilisée durant cette étape de ventilation forcée peut varier en fonction du temps Tfct. Par exemple, cette durée limitée est dans ce cas égale à une différence entre le seuil mémorisé et ledit temps Tfct.

Selon une réalisation, lorsqu'un ordre d'arrêt ORD1 est généré, la machine électrique est utilisée en mode moteur durant une étape de ventilation forcée pendant une durée limitée égale à une différence entre le seuil mémorisé et un temps Tfct de fonctionnement au ralenti. En cas d'absence de phase de ralenti préalable, le temps Tfct de fonctionnement est considéré comme étant nul ce qui permet de solliciter la machine électrique soit en cas d'un arrêt direct soit suite à une phase de ralenti courte.

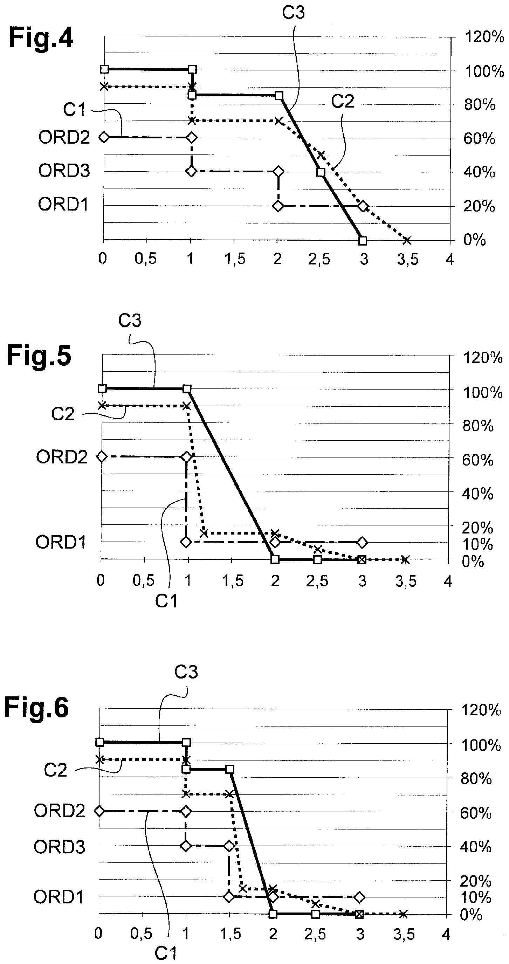

Les figures 4 à 6 présentent respectivement trois diagrammes illustrant le fonctionnement de l'invention au regard d'un procédé de l'état de l'art. En particulier, la figure 4 illustre un procédé de l'état de l'art, la figure 5 illustre le procédé de l'invention lorsqu'aucune phase de ralenti n'est initiée avant de requérir l'arrêt de la turbine à gaz et la figure 6 illustre le procédé de l'invention lorsqu'une phase de ralenti est initiée avant de requérir l'arrêt de la turbine à gaz.

Chaque diagramme présente une abscisse graduée en minutes, une ordonnée à sa gauche illustrant la position du sélecteur et une ordonné à sa droite des vitesses de rotation en pourcentage des vitesses nominales du générateur de gaz et de la turbine de travail respectivement. Chaque diagramme présente une première courbe C1 illustrant l'ordre donné par le sélecteur, une deuxième courbe C2 illustrant la vitesse de rotation du générateur de gaz et une troisième courbe C3 illustrant la vitesse de rotation de la turbine de travail qui est dans ces exemple une turbine de travail libre ou liée avec une roue libre. Les données temporelles fournies sont données à titre illustratif et sont fonction de la turbine à gaz à considérer.

Selon le procédé connu de l'état de l'art illustré sur la figure 4, le sélecteur génère initialement un ordre de fonctionnement nominal ORD2. La turbine à gaz fonctionne de manière nominale. La vitesse de rotation de la turbine de travail est à sa vitesse nominale et la vitesse de rotation du générateur de gaz est égale à 90% de sa vitesse nominale.

Entre une et deux minutes, le sélecteur génère un ordre de fonctionnement au ralenti ORD3. La turbine à gaz fonctionne au ralenti. La vitesse de rotation de la turbine de travail est égale sensiblement à 85% de sa vitesse nominale et la vitesse de rotation du générateur de gaz est égale à 70% de sa vitesse nominale.

A l'issue de deux minutes nécessaires au refroidissement de la turbine à gaz comme indiqué éventuellement dans un manuel de vol, le sélecteur est commandé pour générer un ordre d'arrêt ORD1. Les vitesses de rotation de la turbine de travail et du générateur de gaz diminuent jusqu'à une valeur nulle en fonction des puissances résistives liées aux pertes principalement mécaniques et aérodynamiques.

Selon le procédé de l'invention illustré sur la figure 5, le sélecteur génère initialement un ordre de fonctionnement nominal ORD2. La turbine à gaz fonctionne de manière nominale. La vitesse de rotation de la turbine de travail est à sa vitesse nominale et la vitesse de rotation du générateur de gaz est égale à 90% de sa vitesse nominale.

A l'issue d'une minute, le sélecteur est selon cet exemple sollicité pour générer directement un ordre d'arrêt ORD1.

L'alimentation en carburant est coupée et la vitesse de rotation de la turbine de travail diminue jusqu'à une valeur nulle en fonction des puissances résistives liées aux pertes principalement mécaniques et aérodynamiques. La décélération de la turbine de travail peut être optimisée en mettant en œuvre une étape de freinage automatique de cette turbine de travail. La pente selon laquelle la vitesse de rotation de la turbine de travail décroit est alors fortement augmentée.

Par contre, la machine électrique est mise en route pour entraîner en rotation les organes tournants du générateur de gaz. La vitesse de rotation du générateur de gaz décroit mais est maintenue à une vitesse de ventilation par exemple pendant une durée limité d'une minute. Cette vitesse de ventilation est par exemple comprise entre 8% inclus et 15% inclus de la vitesse nominale du générateur de gaz et est éventuellement fonction de la température extérieure. Durant cette étape, la vitesse de rotation du générateur de gaz peut être constante ou dégressive ou constante puis dégressive par exemple. A l'issue de cette durée limitée, la machine électrique est stoppée.

La machine électrique peut par exemple être contrôlée au travers d'une consigne de vitesse transmise par le calculateur de la turbine à gaz à la machine électrique, la machine électrique et/ou le générateur de gaz étant éventuellement muni(s) d'un capteur de vitesse ou de position pour permettre un asservissement en vitesse éventuellement contrôlée en interne dans la machine électrique. Selon un exemple, la consigne de vitesse peut être déterminée en fonction d'un pourcentage d'une constante, le pourcentage pouvant éventuellement varier en fonction de la température extérieure, la constante pouvant être la vitesse nominale précitée.

La machine électrique peut être aussi contrôlée par son propre contrôleur en fonction des commandes envoyées par le sélecteur et de ses propres lois préalablement mémorisées dans le contrôleur. Par exemple, un contrôleur de la machine électrique établit la consigne de vitesse précitée.

D'autres méthodes de pilotage sont envisageables et par exemple un asservissement par le biais d'une consigne de couple et éventuellement de la mesure de courant électrique avec des capteurs de courant, donnant l'image du couple développé.

Selon le procédé de l'invention illustré sur la figure 6, le sélecteur est initialement sollicité pour générer un ordre de fonctionnement nominal ORD2. La turbine à gaz fonctionne de manière nominale. La vitesse de rotation de la turbine de travail est à sa vitesse nominale et la vitesse de rotation du générateur de gaz est égale à 90% de sa vitesse nominale.

A l'issue d'une minute, le sélecteur est sollicité pour générer un ordre de fonctionnement au ralenti ORD3. La turbine à gaz fonctionne au ralenti pendant un temps Tfct. Si ce temps est supérieur au seuil mémorisé, le circuit de carburant est coupé à l'issue de ce temps sans que la machine électrique soit sollicitée.

Selon l'exemple illustré, le seuil est fixé à une minute et le temps est égal à trente secondes.

Dès lors, au bout d'un minute et trente secondes, le sélecteur est selon cet exemple sollicité pour générer un ordre d'arrêt ORD1. L'alimentation en carburant est coupée et la vitesse de rotation de la turbine de travail diminue jusqu'à une valeur nulle en fonction des puissances résistives liées aux pertes principalement mécaniques et aérodynamiques. Par contre, la machine électrique est mise en route pour entraîner en rotation les organes tournants du générateur de gaz. La vitesse de rotation du générateur de gaz décroit mais est maintenue à une vitesse comprise entre 8% et 15% de sa vitesse nominale par exemple, pendant une durée limitée. A l'issue de cette durée limitée, la machine électrique est stoppée. La durée limitée est dans cet exemple égale à une différence entre le seuil d'une minute et le temps Tfct de trente secondes et vaut donc trente secondes.

Selon un autre aspect, si après la génération d'un ordre d'arrêt le sélecteur est sollicité pour générer un ordre de fonctionnement nominal ou au ralenti, la turbine à gaz est redémarrée. Le procédé décrit précédemment peut alors à nouveau s'appliquer.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention tel que définie dans les revendications.

## Revendications

1. Procédé pour arrêter au moins une turbine à gaz (11), ladite au moins une turbine à gaz (11) comportant un générateur de gaz (13) muni d'organes tournants (14, 15) et d'une chambre de combustion (16), ladite au moins une turbine à gaz (11) comprenant au moins une turbine de travail (17), ladite au moins une turbine à gaz (11) comprenant un circuit de carburant (20) piloté par un calculateur (30), ledit calculateur (30) étant en communication avec un sélecteur (40),
**caractérisé en ce que** le procédé comporte les étapes suivantes pour arrêter ladite au moins une turbine à gaz (11) en fonctionnement et alimentée en carburant par le circuit de carburant (20) :
- génération d'un ordre d'arrêt de la au moins une turbine à gaz avec le sélecteur,
- suite à ladite génération de l'ordre d'arrêt, fermeture du circuit de carburant (20) sur ordre du calculateur (30),
- suite à ladite génération de l'ordre d'arrêt, lorsque ladite au moins une turbine à gaz (11) n'est pas au ralenti préalablement à ladite fermeture ou lorsque ladite au moins une turbine à gaz est au ralenti au moment de ladite génération de l'ordre d'arrêt pendant un temps de fonctionnement inférieur à un seuil mémorisé, mise en rotation automatique desdits organes tournants (14, 15) avec une machine électrique (50) pendant une durée limitée.

2. Procédé selon la revendication 1,
**caractérisé en ce que** ledit procédé comporte une étape de freinage avec un frein de ladite au moins une turbine de travail.

3. Procédé selon l'une quelconque des revendications 1 à 2, **caractérisé en ce que** ladite durée limitée est égale à une durée maximale mémorisée.

4. Procédé selon l'une quelconque des revendications 1 à 2,
**caractérisé en ce que** ledit sélecteur étant configuré pour pouvoir générer un ordre de fonctionnement au ralenti de la au moins une turbine à gaz, le procédé comporte les étapes suivantes :
- détection que ladite au moins une turbine à gaz est au ralenti au moment de ladite génération de l'ordre d'arrêt,
- lorsque ladite au moins une turbine à gaz est au ralenti au moment de ladite génération de l'ordre d'arrêt, détermination dudit temps de fonctionnement au ralenti de la au moins une turbine à gaz (11) avant ladite génération de l'ordre d'arrêt,
- lorsque ledit temps est inférieur au seuil, mise en rotation automatique desdits organes tournants (14, 15) avec la machine électrique (50) pendant ladite durée limitée.

5. Procédé selon la revendication 4,
**caractérisé en ce que** ladite durée limitée varie en fonction dudit temps.

6. Procédé selon l'une quelconque des revendications 4 à 5,
**caractérisé en ce que** ladite durée limitée est égale à une différence entre ledit seuil mémorisé et ledit temps.

7. Procédé selon l'une quelconque des revendications 1 ou 6,
**caractérisé en ce que** durant ladite mise en rotation automatique desdits organes tournants (14, 15) avec la machine électrique (50) pendant ladite durée limitée, ladite machine électrique entraîne en rotation lesdits organes tournants à une vitesse de ventilation paramétrable automatiquement en utilisation.

8. Procédé selon l'une quelconque des revendications 1 à 7,
**caractérisé en ce que** ledit sélecteur (40) étant configuré pour pouvoir générer un ordre de fonctionnement à une vitesse de ralenti du générateur de gaz, durant ladite mise en rotation automatique desdits organes tournants (14, 15) avec la machine électrique (50) pendant ladite durée limitée ladite machine électrique entraîne en rotation lesdits organes tournants à une vitesse de ventilation inférieure à la vitesse de ralenti.

9. Procédé selon l'une quelconque des revendications 7 à 8,
**caractérisé en ce que** ladite vitesse de ventilation est au maximum comprise entre 8% et 15% d'une vitesse nominale mémorisée pour le générateur de gaz.

10. Procédé selon l'une quelconque des revendications 7 à 9,
**caractérisé en ce que** ladite vitesse de ventilation est soit constante soit dégressive soit constante puis dégressive.

11. Procédé selon l'une quelconque des revendications 1 à 10,
**caractérisé en ce que** ladite mise en rotation automatique desdits organes tournants (14, 15) avec la machine électrique (50) pendant une durée limitée est soit commandée par un signal transmis par ledit sélecteur à la machine électrique soit commandée par un signal transmis par ledit calculateur à la machine électrique soit commandée par un signal transmis par un contrôleur externe qui est en communication avec au moins ledit sélecteur ou le calculateur.

12. Procédé selon l'une quelconque des revendications 1 à 11,
**caractérisé en ce que** ladite mise en rotation automatique desdits organes tournants (14, 15) avec la machine électrique (50) pendant une durée limitée comporte un asservissement en vitesse de ladite machine électrique en fonction d'une vitesse estimée avec au moins un capteur de la machine électrique ou de la au moins une turbine à gaz.

13. Procédé selon l'une quelconque des revendications 1 à 11,
**caractérisé en ce que** ladite mise en rotation automatique desdits organes tournants (14, 15) avec la machine électrique (50) pendant une durée limitée comporte un asservissement en couple de ladite machine électrique en fonction d'un couple estimé avec une mesure du courant électrique consommé par la machine électrique.

14. Procédé selon l'une quelconque des revendications 1 à 13,
**caractérisé en ce que** ladite au moins une turbine à gaz comprenant plusieurs turbines à gaz reliées chacune à une machine électrique, le procédé comporte l'étape suivante : contrôle de chaque machine électrique en mode moteur avec un contrôleur commun, ledit contrôleur activant les machines électriques l'une après l'autre lors d'un arrêt des turbines à gaz, aucune machine électrique ne pouvant fonctionner dans un mode générateur d'électricité lors dudit arrêt.

15. Système (1) muni d'au moins une turbine à gaz (11), ladite turbine à gaz (11) comportant un générateur de gaz (13) muni d'organes tournants (14, 15) et d'une chambre de combustion (16), ladite turbine à gaz (11) comprenant au moins une turbine de travail (17), ladite turbine à gaz (11) comprenant un circuit de carburant (20) piloté par un calculateur (30), ledit calculateur (30) étant en communication avec un sélecteur (40), ledit sélecteur (40) étant configuré pour générer un ordre d'arrêt de la au moins une turbine à gaz (11) et au moins un ordre de fonctionnement de la au moins une turbine à gaz,
**caractérisé en ce que** ledit système comporte une machine électrique par turbine à gaz, ladite machine électrique étant reliée au générateur de gaz de la turbine à gaz correspondante et étant configurée pour appliquer le procédé selon l'une quelconque des revendications 1 à 14.

16. Système selon la revendication 15,
**caractérisé en ce que** ledit système comporte au moins un frein pour freiner ladite turbine de travail.

17. Véhicule,
**caractérisé en ce que** ledit véhicule comporte un système selon l'une quelconque des revendications 15 à 16.

18. Véhicule selon la revendication 17,
**caractérisé en ce que** ledit véhicule comporte au moins un rotor mis en rotation par ladite turbine de travail.

## Patentansprüche

1. Verfahren zum Anhalten von mindestens einer Gasturbine (11),
wobei die mindestens eine Gasturbine (11) einen Gasgenerator (13) umfasst, der mit rotierenden Elementen (14, 15) und einer Brennkammer (16) versehen ist, wobei die mindestens eine Gasturbine (11) mindestens eine Arbeitsturbine (17) umfasst, wobei die mindestens eine Gasturbine (11) einen von einem Rechner (30) gesteuerten Brennstoffkreislauf (20) umfasst, und der Rechner (30) in Kommunikation mit einem Wählschalter (40) steht,
**dadurch gekennzeichnet, dass** das Verfahren zum Anhalten der mindestens einen in Betrieb befindlichen und durch den Brennstoffkreislauf (20) mit Brennstoff versorgten Gasturbine (11) die folgenden Schritte umfasst:
- Erzeugen eines Befehls zum Anhalten der mindestens einen Gasturbine mit dem Wählschalter,
- nach dem Erzeugen des Anhaltebefehls, Schließen des Brennstoffkreislaufs (20) auf Befehl des Rechners (30),
- nach dem Erzeugen des Anhaltebefehls, wenn die mindestens eine Gasturbine (11) vor dem Abschalten nicht im Leerlauf ist oder wenn die mindestens eine Gasturbine zum Zeitpunkt der Erzeugung des Anhaltebefehls für eine Betriebszeit unterhalb eines gespeicherten Schwellenwerts im Leerlauf ist, automatisches Drehantreiben der rotierenden Elemente (14, 15) durch eine elektrische Maschine (50) für eine begrenzte Zeitspanne.

2. Verfahren nach Anspruch 1,
**dadurch gekennzeichnet, dass** das Verfahren einen Schritt des Bremsens der mindestens einen Arbeitsturbine mit einer Bremse umfasst.

3. Verfahren nach einem der Ansprüche 1 bis 2,
**dadurch gekennzeichnet, dass** die begrenzte Zeitspanne gleich einer gespeicherten maximalen Zeitspanne ist.

4. Verfahren nach einem der Ansprüche 1 bis 2,
**dadurch gekennzeichnet, dass** der Wählschalter konfiguriert ist, um einen Leerlaufbetriebsbefehl für die mindestens eine Gasturbine erzeugen zu können, wobei das Verfahren die folgenden Schritte umfasst:
- Erfassen, dass die mindestens eine Gasturbine zum Zeitpunkt der Erzeugung des Anhaltebefehls im Leerlauf ist,
- wenn die mindestens eine Gasturbine zum Zeitpunkt der Erzeugung des Anhaltebefehls im Leerlauf ist, Bestimmen der Betriebszeit im Leerlauf der mindestens einen Gasturbine (11) vor der Erzeugung des Anhaltebefehls,
- wenn die besagte Betriebszeit unter dem Schwellenwert liegt, automatisches Drehantreiben der rotierenden Elemente (14, 15) durch die elektrische Maschine (50) für die begrenzte Zeitspanne.

5. Verfahren nach Anspruch 4,
**dadurch gekennzeichnet, dass** die begrenzte Zeitspanne als eine Funktion der Zeit variiert.

6. Verfahren nach einem der Ansprüche 4 bis 5,
**dadurch gekennzeichnet, dass** die begrenzte Zeitspanne gleich einer Differenz zwischen dem gespeicherten Schwellenwert und der Zeit ist.

7. Verfahren nach einem der Ansprüche 1 oder 6,
**dadurch gekennzeichnet, dass** während des automatischen Drehantreibens der rotierenden Elemente (14, 15) durch die elektrische Maschine (50) für die begrenzte Zeitspanne die elektrische Maschine die rotierenden Elemente mit einer Ventilationsgeschwindigkeit drehantreibt, die im Betrieb automatisch einstellbar ist.

8. Verfahren nach einem der Ansprüche 1 bis 7,
**dadurch gekennzeichnet, dass** der Wählschalter (40) konfiguriert ist, um einen Betriebsbefehl bei einer Leerlaufdrehzahl des Gasgenerators erzeugen zu können, wobei während dem automatischen Drehantreiben der rotierenden Elemente (14, 15) durch die elektrische Maschine (50) für die begrenzte Zeitspanne die elektrische Maschine die rotierenden Elemente bei einer Ventilationsgeschwindigkeit drehantreibt, die niedriger ist als die Leerlaufgeschwindigkeit.

9. Verfahren nach einem der Ansprüche 7 bis 8,
**dadurch gekennzeichnet, dass** die Ventilationsgeschwindigkeit höchstens zwischen 8% und 15% einer gespeicherten Nenngeschwindigkeit für den Gasgenerator beträgt.

10. Verfahren nach einem der Ansprüche 7 bis 9,
**dadurch gekennzeichnet, dass** die Ventilationsgeschwindigkeit entweder konstant oder degressiv oder konstant und dann degressiv ist.

11. Verfahren nach einem der Ansprüche 1 bis 10,
**dadurch gekennzeichnet, dass** das automatische Drehantreiben der rotierenden Elemente (14, 15) durch die elektrische Maschine (50) für eine begrenzte Zeitspanne entweder durch ein Signal gesteuert wird, das von dem Wählschalter an die elektrische Maschine gesendet wird, oder durch ein Signal gesteuert wird, das von dem Computer an die elektrische Maschine gesendet wird, oder durch ein Signal gesteuert wird, das von einer externen Steuerung gesendet wird, die zumindest mit dem Wählschalter oder dem Computer in Verbindung steht.

12. Verfahren nach einem der Ansprüche 1 bis 11,
**dadurch gekennzeichnet, dass** das automatische Drehantreiben der rotierenden Elemente (14, 15) durch die elektrische Maschine (50) für eine begrenzte Zeitspanne eine Geschwindigkeitsregelung der elektrischen Maschine in Abhängigkeit von einer Geschwindigkeit umfasst, die mit mindestens einem Sensor der elektrischen Maschine oder der mindestens einen Gasturbine abgeschätzt wird.

13. Verfahren nach einem der Ansprüche 1 bis 11,
**dadurch gekennzeichnet, dass** das automatische Drehantreiben der rotierenden Elemente (14, 15) mit der elektrischen Maschine (50) für eine begrenzte Zeitspanne eine Drehmomentsteuerung der elektrischen Maschine als eine Funktion eines Drehmoments umfasst, das mit einer Messung des von der elektrischen Maschine verbrauchten elektrischen Stroms geschätzt wird.

14. Verfahren nach einem der Ansprüche 1 bis 13,
**dadurch gekennzeichnet, dass** die mindestens eine Gasturbine eine Mehrzahl von Gasturbinen umfasst, die jeweils mit einer elektrischen Maschine verbunden sind, wobei das Verfahren den folgenden Schritt umfasst: Steuern jeder elektrischen Maschine in einem Motormodus mit einer gemeinsamen Steuerung, wobei die Steuerung die elektrischen Maschinen eine nach der anderen während einer Abschaltung der Gasturbinen aktiviert, wobei keine elektrische Maschine während des Anhaltens in einem Stromerzeugungsmodus arbeiten kann.

15. Anlage (1) mit mindestens einer Gasturbine (11),
wobei die Gasturbine (11) einen Gasgenerator (13) umfasst, der mit rotierenden Elementen (14, 15) und einer Brennkammer (16) versehen ist, wobei die Gasturbine (11) mindestens eine Arbeitsturbine (17) umfasst, wobei die Gasturbine (11) einen von einem Rechner (30) gesteuerten Brennstoffkreislauf (20) umfasst, der Rechner (30) mit einem Wählschalter (40) in Verbindung steht, wobei der Wählschalter (40) konfiguriert ist, um einen Befehl zum Anhalten der mindestens einen Gasturbine (11) und mindestens einen Befehl zum Betreiben der mindestens einen Gasturbine zu erzeugen,
**dadurch gekennzeichnet, dass** das System eine elektrische Maschine pro Gasturbine umfasst, wobei die elektrische Maschine mit dem Gasgenerator der entsprechenden Gasturbine verbunden ist und konfiguriert ist, um das Verfahren nach einem der Ansprüche 1 bis 14 durchzuführen.

16. System nach Anspruch 15,
**dadurch gekennzeichnet, dass** das System mindestens eine Bremse zum Abbremsen der Arbeitsturbine umfasst.

17. Fahrzeug,
**dadurch gekennzeichnet, dass** das Fahrzeug ein System nach einem der Ansprüche 15 bis 16 aufweist.

18. Fahrzeug nach Anspruch 17,
**dadurch gekennzeichnet, dass** das Fahrzeug mindestens einen durch die Arbeitsturbine drehangetriebenen Rotor aufweist.

## Claims

1. Method for shutting down at least one gas turbine (11), withat least one said gas turbine (11) comprising a gas generator (13) provided with rotary members (14, 15) and with a combustion chamber (16), with at least one said gas turbine (11) comprising at least one power turbine (17), with at least one said gas turbine (11) comprising a fuel circuit (20) controlled by a computer (30), said computer (30) being in communication with a selector (40), **characterised in that** the method comprises the following steps for shutting down at least one said gas turbine (11) which is in operation and supplied with fuel by the fuel circuit (20):
- generation of a command to shut down at least one gas turbine by means of the selector,
- following said generation of the shutdown command, shutting off of the fuel circuit (20) at the command of the computer (30),
- following said generation of the shutdown command, when at least one said gas turbine (11) is not idling prior to said shutoff or when said at least one gas turbine is idling at the time of said generation of the shutdown command for an operating time below a stored threshold, automatically setting said rotary members (14, 15) into rotation by means of an electric machine (50) for a limited period.

2. Method according to claim 1, **characterised in that** said method comprises a braking step by means of a brake of at least one said power turbine.

3. Method according to either claim 1 or claim 2, **characterised in that** said limited period is equal to a stored maximum period.

4. Method according to either claim 1 or claim 2, **characterised in that** said selector is configured to be able to generate an order for idle operation of at least one gas turbine, the method comprising the following steps:
- detection that at least one said gas turbine is idling at the time of said generation of the shutdown command,
- when at least one said gas turbine is idling at the time of said generation of the shutdown command, determination of the said idle operating time of the at least one gas turbine (11) before said generation of the shutdown command,
- when said time is below the threshold, automatically setting of said rotary members (14, 15) into rotation by means of the electric machine (50) for said limited period.

5. Method according to claim 4, **characterised in that** said limited period varies depending on said time.

6. Method according to either claim 4 or claim 5, **characterised in that** said limited period is equal to a difference between said stored threshold and said time.

7. Method according to either claim 1 or claim 6, **characterised in that** when said rotary members (14, 15) are automatically set into rotation by means of the electric machine (50) for said limited period, said electric machine rotates said members at a ventilation speed that can be automatically configured during use.

8. Method according to any of claims 1 to 7, **characterised in that** said selector (40) is configured to be able to generate a command to operate at an idling speed of the gas generator, and when said rotary members (14, 15) are automatically set into rotation by means of the electric machine (50) for said limited period, said electric machine rotates said rotary members at a ventilation speed lower than the idling speed.

9. Method according to either claim 7 or claim 8, **characterised in that** said ventilation speed is at most between 8% and 15% of a stored nominal speed of the gas generator.

10. Method according to any of claims 7 to 9, **characterised in that** said ventilation speed is either constant or degressive, or constant and then degressive.

11. Method according to any of claims 1 to 10, **characterised in that** said automatic setting into rotation of said rotary members (14, 15) by means of the electric machine (50) for a limited period is either controlled by a signal transmitted by said selector to the electric machine or controlled by a signal transmitted by said computer to the electric machine or controlled by a signal transmitted by an external controller which is in communication with at least said selector or the computer.

12. Method according to any of claims 1 to 11, **characterised in that** said automatic setting into rotation of said rotary members (14, 15) by means of the electric machine (50) for a limited period comprises speed control of said electric machine on the basis of a speed estimated by means of at least one sensor of the electric machine or of at least one gas turbine.

13. Method according to any of claims 1 to 11, **characterised in that** said automatic setting into rotation of said rotary members (14, 15) by means of the electric machine (50) for a limited period comprises torque control of said electric machine on the basis of a torque estimated by means of a measurement of the electrical power consumed by the electric machine.

14. Method according to any of claims 1 to 13, **characterised in that** said at least one gas turbine comprises a plurality of gas turbines, each of which is connected to an electric machine, the method comprising the following step:
control of each electric machine in motor mode by means of a common controller, said controller activating the electric machines one after the other when the gas turbines are shut down, it not being possible for any of the electric machines to operate in an electricity-generating mode during said shutdown.

15. System (1) provided with at least one gas turbine (11), said gas turbine (11) comprising a gas generator (13) provided with rotary members (14, 15) and with a combustion chamber (16), said gas turbine (11) comprising at least one power turbine (17), said gas turbine (11) comprising a fuel circuit (20) controlled by a computer (30), said computer (30) being in communication with a selector (40), said selector (40) being configured to generate an order to shut down at least one gas turbine (11) and at least one order to operate the at least one gas turbine, **characterised in that** said system comprises one electric machine per gas turbine, said electric machine being connected to the gas generator of the corresponding gas turbine and being configured to apply the method according to any of claims 1 to 14.

16. System according to claim 15, **characterised in that** said system comprises at least one brake for braking said power turbine.

17. Vehicle, **characterised in that** said vehicle comprises a system according to any of claims 15 to 16.

18. Vehicle according to claim 17, **characterised in that** said vehicle comprises at least one rotor which is set into rotation by said power turbine.
